# EUROPÄISCHE PATENTSCHRIFT

(11) **EP 1 371 998 B1**
(45) Veröffentlichungstag und Bekanntmachung des Hinweises auf die Patenterteilung: **23.04.2014**
(21) Anmeldenummer: 03101679.3
(22) Anmeldetag: 10.06.2003
(51) Int. Cl.: G01S 7/40, G01S 13/32

(54) **Monostatisches Mikrowellenmesssystem mit Sendeleistungsüberwachug**
Monostatic microwave system with transmitted power monitoring
Système monostatique à microondes avec la surveillance de la puissance emis

(30) Priorität: 12.06.2002 DE 10226039
(43) Veröffentlichungstag der Anmeldung: 17.12.2003
(73) Patentinhaber: ROBERT BOSCH GMBH, 70442 Stuttgart (DE)
(72) Erfinder: Miosga, Klaus-Dieter, 71522, Backnang (DE); Himmelstoss, Armin, 71554, Weissach i.T. (DE); Hauk, Joachim, 71272, Renningen-Malmsheim (DE)

(56) Entgegenhaltungen:
- EP-A- 0 536 835
- EP-A- 0 953 851
- US-A- 5 872 537
- US-B1- 6 404 381

## Beschreibung

### Technisches Gebiet

Die Erfindung betrifft ein monostatisches Mikrowellenmesssystem mit einem Sendeoszillator, der mit einer Sende- und Empfangsantenne für elektromagnetische Strahlung verbunden ist und mit einem Empfangsmischer zur Mischung von Sendesignal und Empfangssignal.

### Stand der Technik

Monostatische Mikrowellenmesssysteme der gattungsgemäßen Art sind bekannt. Die vom Sendeoszillator erzeugten Mikrowellen werden von der Antenne ausgesandt und von einem Messobjekt reflektiert und von derselben Antenne wieder aufgenommen. Es handelt sich somit um eine kombinierte Sende- und Empfangsantenne. Das Sendesignal wird mit dem Empfangssignal über einen Empfangsmischer in ein Zwischenfrequenzsignal umgesetzt. Dieses Zwischenfrequenzsignal ist wesentlich niederfrequenter als das Sendesignal. Hierdurch besteht die Möglichkeit, dieses mit einer Niederfrequenzelektronik zu verarbeiten. Die Frequenz des Zwischenfrequenzsignals ist hierbei ein Maß für den Abstand zwischen Sende- und Empfangsantenne und Messobjekt, während die Amplitude und Phase des Zwischenfrequenzsignals von den Eigenschaften des Messobjektes abhängen.

Es ist bekannt, dass die Sendeleistung des monostatischen Mikrowellenmesssystems während dessen Einsatz gemessen und überwacht werden muss. Hier ist bekannt, einen so genannten Sende-Pegel-Detektor einzusetzen, der als Hochfrequenzdiode in den Sendepfad eingekoppelt wird. Hierzu sind spezielle Sendeleistungs-Überwachungsschaltungen erforderlich. Nachteilig ist, dass eine derartige Überwachung der Sendeleistung nur sehr aufwendig und kostenintensiv realisiert werden kann.

Aus der US 6,404,381 ist ein Kraftfahrzeugradar zum Erfassen des Abstandes und/oder der Geschwindigkeit eines Objektes relativ zu dem Kraftfahrzeug bekannt, bei dem mittels einer Modulationsfunktion ein frequenzverstimmbarer Oszillator mit einem durch eine Leistungssteuerfunktion ansteuerbarer Leistungsschalter zur Variation der Sendeleistung versehen ist. Das Kraftfahrzeugradar ist durch eine variable Einstellung der Modulationsfunktion und der Leistungssteuerfunktion alternierend in mindestens zwei unterschiedlichen, sich überlagernden Betriebsarten zu betreiben, die auf unterschiedliche Meßbereiche des Kraftfahrzeugradars abgestimmt sind.

### Darstellung der Erfindung, Aufgabe, Lösung, Vorteile

Es ist Aufgabe der vorliegenden Erfindung, ein monostatisches Mikrowellenmesssystem der gattungsgemäßen Art zu schaffen, das sich durch einen einfachen und kostengünstigen Aufbau auszeichnet.

Diese Aufgabe wird durch eine Vorrichtung der oben genannten Art mit den in Anspruch 1 gekennzeichneten Merkmalen gelöst.

Das monostatische Mikrowellenmesssystem mit den im Anspruch 1 genannten Merkmalen bietet demgegenüber den Vorteil, dass dieses sich durch einen einfachen und somit kostengünstigen Aufbau auszeichnet. Dadurch, dass der Empfangsmischer zur Mischung von Sendesignal und Empfangssignal gleichzeitig als Sendeleistungsüberwachung geschaltet ist, wird vorteilhaft möglich, dass auf eine zusätzliche, ausschließlich der Überwachung der Sendeleistung dienenden Hochfrequenzschaltung verzichtet werden kann.

In bevorzugter Ausgestaltung der Erfindung ist vorgesehen, dass der Empfangsmischer direkt in den Sendepfad, als so genannter Durchblasemischer, geschaltet ist. Hierdurch wird eine zusätzliche Auskopplung der Sendeleistung aus dem Sendepfad vermieden.

In weiterer bevorzugter Ausgestaltung der Erfindung ist vorgesehen, dass als Empfangsmischer eine Empfangsmischerdiode eingesetzt wird. Hierdurch wird vorteilhaft möglich, da die an die Empfangsmischerdiode gelieferte Sendeleistung durch Zerlegung durch die so genannte Taylor-Reihe auch gleichgerichtet wird, neben der gewünschten Empfangsmischerfrequenz gleichzeitig auch eine der Sendeleistung proportionale Gleichspannung abzugreifen. Durch Auswertung dieser Gleichspannung steht ein der Sendeleistung proportionales Signal zur Auswertung, insbesondere zur Überwachung der Sende leistung, zur Verfügung.

In weiterer bevorzugter Ausgestaltung der Erfindung ist vorgesehen, dass die Empfangsmischerdiode vorgespannt ist. Hierdurch wird vorteilhaft möglich, die Empfindlichkeit der Empfangsmischerdiode hinsichtlich des Sendepegels zu steigern, so dass die Überwachung des Sendepegels und somit der Sendeleistung genauer wird.

### Kurze Beschreibung der Zeichnungen

Nachstehend wird die Erfindung in einem Ausführungsbeispiel anhand der beigefügten Zeichnungen näher erläutert. Es zeigen:
- Fig. 1: ein Blockschaltbild des erfindungsgemäßen monostatischen Mikrowellenmesssystems und
- Fig. 2: Übertragungskennlinien von Empfangsmischerdioden.

### Bester Weg zur Ausführung der Erfindung

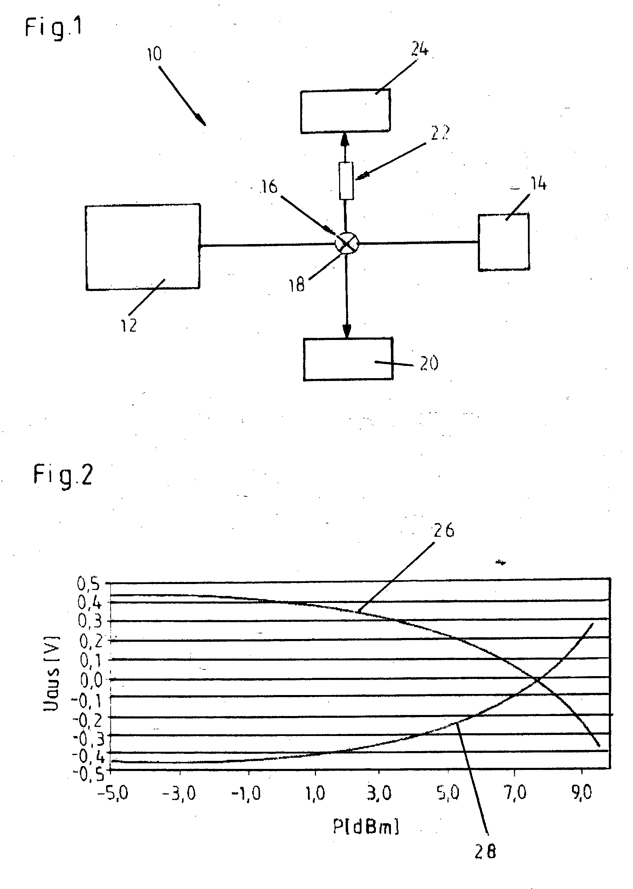

Fig. 1 zeigt in einem Blockschaltbild ein insgesamt mit 10 bezeichnetes monostatisches Mikrowellenmesssystem. Das Mikrowellenmesssystem 10 umfasst einen Sendeoszillator 12 sowie eine Sende- und Empfangsantenne 14. Zwischen Sendeoszillator 12 und Sende- und Empfangsantenne 14 ist ein Empfangsmischer 16 geschaltet, der als Empfangsmischerdiode 18 ausgebildet ist. Die Empfangsmischerdiode 18 ist einerseits mit einer Signalerfassungs- und Verarbeitungseinheit 20 und andererseits über ein Speisenetzwerk 22 für eine Vorspannung der Empfangsmischerdiode 18 mit einer Sendepegel-Überwachungseinheit 24 verbunden.

Das in Figur 1 dargestellte Mikrowellenmesssystem 10 zeigt folgende Funktion:
Mittels des Sendeoszillators 12 wird ein Sendesignal mit definierter Frequenz erzeugt und als elektromagnetische Mikrowellenstrahlung über die Sende- und Empfangsantenne 14 abgestrahlt. Eine von einem nicht dargestellten Messobjekt reflektierte Mikrowellenstrahlung wird von der gleichen Sende- und Empfangsantenne 14 empfangen. Sowohl Sendesignal als auch Empfangssignal werden über die Empfangsmischerdiode 18 geführt. Diese ist als so genannter Durchblasemischer geschaltet, das heißt direkt in den Sendepfad geschaltet.

Die Empfangsmischerdiode 18 liefert einerseits in an sich bekannter Weise ein Zwischenfrequenzsignal an die Signalerfassungs- und Verarbeitungseinheit 20. Aufgrund dieses Zwischenfrequenzsignals kann auf Abstand und/oder Eigenschaften des nicht dargestellten Messobjektes geschlossen werden.

Andererseits liefert die Empfangsmischerdiode 18 ein Gleichspannungssignal an die Sendepegel-Überwachungseinheit 24. Die Empfangsmischerdiode 18 ist ein nichtlineares Bauelement, das heißt, die Gleichspannung ist abhängig von der Sendepegelleistung des Sendeoszillators 12. Je nachdem, wie die Empfangsmischerdiode 18 gepolt ist, steigt die Gleichspannung mit steigender Sendepegelleistung an oder diese fällt mit steigender Sendepegelleistung ab.

Figur 2 zeigt Kennlinien der Empfangsmischerdioden, bei denen die Ausgangsgleichspannung Uₐᵤₛ über der Sendepegelleistung P aufgetragen ist. Eine erste Kennlinie 26 stellt die Ausganggleichspannung über der Sendepegelleistung P für eine positiv gepolte Empfangsmischerdiode 18 dar, während eine zweite Kennlinie 28 die Ausgangsgleichspannung über der Sendepegelleistung P für eine negativ gepolte Empfangsmischerdiode 18 zeigt. Aufgrund der Abhängigkeit zwischen Ausgangsgleichspannung Uₐᵤₛ und Sendepegelleistung P kann in einfacher Weise über die Sendepegel-Überwachungseinheit 24 auf die momentane Sendepegelleistung P des Sendeoszillators 12 erkannt werden. Über das Speisenetzwerk 22 erfolgt eine Vorspannung der Empfangsmischerdiode 18, beispielsweise mit einer Vorspannung von 0,45 V. Hierdurch wird erreicht, dass die Empfindlichkeit der Empfangsmischerdiode 18 gegenüber dem Sendepegel gesteigert ist. Die Genauigkeit der Messung der Sendepegelleistung P wird hierdurch erhöht.

### BEZUGSZEICHENLISTE

- 10: Monostatisches Mikrowellenmesssystem
- 12: Sendeoszillator
- 14: Sende- und Empfangsantenne
- 16: Empfangsmischer
- 18: Empfangsmischerdiode
- 20: Signalerfassungs- und Verarbeitungseinheit
- 22: Speisenetzwerk
- 24: Sendepegel-Überwachungseinheit

- P: Sendepegelleistung
- Uₐᵤₛ: Ausgangsgleichspannung

## Patentansprüche

1. Monostatisches Mikrowellenmesssystem mit einem Sendeoszillator (12), der mit einer oder mehreren Sende- und Empfangsantennen (14) für elektromagnetische Strahlung verbunden ist und einem oder mehreren Empfangsmischern (16) zur Mischung von Sendesignal und Empfangssignal, *wobei* der Empfangsmischer (16) eine Empfangsmischerdiode (18) ist,
**dadurch gekennzeichnet,**
**dass** der oder die Empfangsmischer (16) gleichzeitig als Sendeleistungs-Überwachungsbauelemente direkt in den Sendepfad geschaltet ist/sind und dass über diesen/diese Empfangsmischer (16) eine der Sendeleistung proportionale Gleichspannung abgegriffen wird.

2. Monostatisches Mikrowellenmesssystem nach Anspruch 1, **dadurch gekennzeichnet, dass** die Empfangsmischerdiode/n (18) vorgespannt ist/sind.

## Claims

1. Monostatic microwave measuring system comprising a transmitting oscillator (12) which is connected to one or more transmitting and receiving antennas (14) for electromagnetic radiation and comprising one or more receiving mixers (16) for mixing transmit signal and receive signal, the receiving mixer (16) being a receiving mixer diode (18),
**characterized in that**
the receiving mixer or receiving mixers (16) is/are at the same time connected directly into the transmitting path as transmitting power monitoring components and that a direct voltage proportional to the transmitting power is picked up via this/these receiving mixer/s (16).

2. Monostatic microwave measuring system according to Claim 1, **characterized in that** the receiving mixer diode/s (18) is/are biased.

## Revendications

1. Système monostatique à microondes avec un oscillateur d'émission (12), qui est connecté à une ou plusieurs antennes d'émission et de réception (14) pour rayonnement électromagnétique, et avec un ou plusieurs mélangeurs de réception (16) pour le mélange du signal émis et du signal reçu, le mélangeur de réception (16) étant une diode mélangeuse de réception (18),
**caractérisé en ce que**
le ou les mélangeurs de réception (16) est/sont branché(s) directement dans le chemin d'émission simultanément en tant que composants de surveillance de la puissance émise et **en ce qu'**une tension continue proportionnelle à la puissance émise est prélevée par le biais de ce/ces mélangeur(s) de réception (16).

2. Système monostatique à microondes selon la revendication 1, **caractérisé en ce que** la ou les diodes mélangeuse(s) de réception (18) est/sont précontrainte(s).
